Europäisches Patentamt

European Patent Office

Office européen des brevets

(19)

(11) Publication number: **0 429 090 A2**

# EUROPEAN PATENT APPLICATION

(12)

(21) Application number: 90122445.1

(22) Date of filing: 24.11.90

(51) Int. Cl.5: **G01S 13/44**

(30) Priority: 24.11.89 IT 4859589 U

(43) Date of publication of application:
29.05.91 Bulletin 91/22

(84) Designated Contracting States:
**AT BE CH DE FR GB LI NL SE**

(71) Applicant: **SELENIA INDUSTRIE ELETTRONICHE ASSOCIATE S.p.A.**
**Via Tiburtina, KM 12.400**
**I-00131 Roma(IT)**

(72) Inventor: **Labozzetta, Bruno**
**Viale Piramide Cestia 1**
**I-00125 Roma(IT)**

(74) Representative: **Gustorf, Gerhard, Dipl.-Ing.**
**Patentanwalt Dipl.-Ing. Gerhard Gustorf**
**Bachstrasse 6 A**
**W-8300 Landshut(DE)**

(54) **Device for the automatic correction of the differential error, preferably for a monopulse radar receiver.**

(57) Regards a device to be used to automatically correct the differential error utilizing a table where the instantaneous measured values are accumulated , sorted in order of the current azimuth originating them.

This finds its best application in a radar receiver and the problem that it proposes to solve is that of eliminating the deterministic error.

Said device can be placed in the electronics field and more specifically in that of radars.

EP 0 429 090 A2

# DEVICE FOR THE AUTOMATIC CORRECTION OF THE DIFFERENTIAL ERROR, PREFERABLY FOR A MONOPULSE RADAR RECEIVER

The invention regards a device which is capable to automatically correct the differential error utilizing a table in which the instantaneous measured values are accumulated, ordered by the current azimuth value originating them.

Said device can be placed in the electronics field and more specifically in that of radars.

It finds its best application installed in a radar receiver. From the table the average data value is extracted for a consecutive number of values for the current azimuth, the linearization coefficients are calculated and then by multiplying these by the reference value and successively by the instantaneous signal the sum of the result and the value of the relative current azimuth is obtained to be a constant.

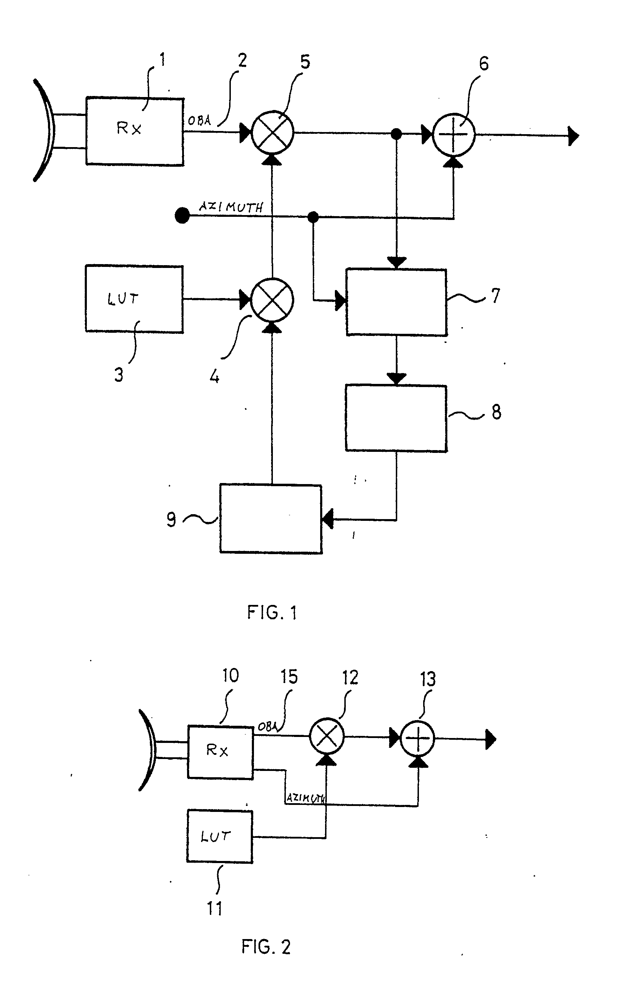

Up to now the task of differential error correction was effectuated as described hereunder (Fig.2).

The receiver 10 supplied the OBA values which where multiplied by the multiplier 12 by values contained in a fixed table.

The result of the multiplication was algebraically summed by the summator 13 to the value of the current azimuth which resulted in the measured output value. This latter however, due to the effects of the tolerances in construction and time and thermal variations for the same direction of angular origin of the signals, presented a deterministic type error in function of the current azimuth. The proposed device, for which a patent protection is requested, presents the advantage of eliminating the deterministic error.

In substance, the difference between the known system and the innovative system is that the former presents itself as an open loop system whereas the latter presents itself as an adaptive type system.

In the known technique the range of error tolerance of the azimuth measure of the monopulse type was controlled by defining narrow manufacturing tolerances and adjustment of the system components.

The device, object of the presented invention, is now described for sake of illustration not to be taken in a limitative sense, making reference to the attached figures. (Fig.1 is to be considered as the most significant with regards to the comprehension of the finding).

Fig. 1 Schematic representation of the automatic differential error correction device.

The following can be seen:
1) receiver;
2) OBA signal;
3) table of reference;
4) multiplication node for linearization coefficients;
5) OBA multiplication node;
6) Summation node of the corrected OBA to the current azimuth value;
7) data accumulator;
8) element for calculation of average;
9) Linearization coefficients table.

Fig. 2 general scheme of a known solution.

The operational functioning of the invention is described hereafter making reference to Fig. 1.

The receiver processes the incoming signals from the sum beam and the difference beam thus obtaining the raw OBA signal.

In the multiplication node 5 the signal is multiplied by a variable value which is the product of the reference table 3 by the linearization coefficient of table 9. The result, which is the corrected OBA, is summed in the summation node 6 obtaining therefore the instantaneous OBA value.

The innovative aspect is represented by the insertion of a data accumulator 7, by an element that calculates the OBA average values 8 and by an element that calculates the linearization coefficients 9. The linearization coefficients thus obtained multiply in block 4 the values of the table of reference 3 to pass again then in the multiplier 5 and thus obtain the OBA linearized values which summed algebraically to the current azimuth provides a precise measure of the azimuth value.

The device in question is positioned in the radar receiver and has the task to automatically correct the differential error utilizing a table in which the instantaneous measurements ordered in their originating current azimuth values are accumulated.

The average value for a successive number of current azimuth value is extracted from the table and the multiplication coefficients arc calculated which when multiplied by the resultant average value result that the sum of the result obtained and the current relative azimuth value is a constant.

Variations, either sudden or greater than a preestablished linearization coefficients threshold, indicate a fault in one of the elements which make up the radar system. These information, when compared with the alarm statuses of the controls on the single radar system elements permit to detect a fault , for example in the antenna, for which until now no individual fault detection circuit was ever applied.

**Claims**

1.  Device for differential error detection to be preferably applied to a radar receiver , characterized by the fact that it is essentially constituted by a closed loop that automates the correction operations, comprising in it (loop) a self adjustment by means of the following elements:

    receiver (1);

    OBA signals (2);

    table of reference (3);

    Linearization coefficients multiplication node (4);

    OBA multiplication node (5);

    Sum(mation) node of the corrected OBA to the current azimuth value (6) ;

    Data accumulator (7);

    Element for calculation of the average value (8) ;

    Table of linearization coefficients (9).

2.  Differential error correction device to be preferably applied to a radar receiver as per claim 1, characterized by the fact that that in its preferred application it is inserted in a radar receiver.

FIG. 1

FIG. 2